# EUROPEAN PATENT APPLICATION

(11) **EP 2 246 814 A1**
(43) Date of publication of application: **03.11.2010**
(21) Application number: 10160632.5
(22) Date of filing: 21.04.2010
(51) Int. Cl.: G06Q 30/00

(54) **System for managing purchase orders for consumer goods and for the widespread distribution of said goods and method for implementing said system**

(30) Priority: 21.04.2009 IT MI20090668
(71) Applicant: Di Stefano, Giorgio, 91028 Partanna (TP) (IT)
(72) Inventor: Di Stefano, Giorgio, 91028 Partanna (TP) (IT)
(74) Representative: Botti, Mario

(57) **Abstract**

The invention relates to a system and a method for managing purchase orders for consumer goods and for the widespread distribution of said consumer goods, such as for example food products or mass consumer items, wherein said goods are available at one or more distribution structures (5) or retail outlets and are to be distributed to consumer users. The method provides the following steps:
- remote receiving of a purchase order for consumer goods via a palmtop computer (3) supplied to a consumer user;
- identifying of the consumer user by means of dating processing at a central processing unit (4) connected to the palmtop computer (3);
- transmitting the purchase order towards one or more local processing units of the distribution structures (5) at which all or part of the consumer goods ordered are stocked;
- grouping together the lot of the consumer goods ordered and transporting this lot towards a place of delivery;
- releasing the lot of the consumer goods purchased inside a container (7) with selective access installed at the place of delivery and associated with the consumer user identified.

## Description

### Field of application

The present invention relates to an integrated system for managing purchase orders and for the widespread distribution of consumer goods such as for example food products or mass consumer items.

The invention also relates to a method for implementing the abovementioned system.

The invention likewise relates to a container for keeping said consumer goods.

More particularly, but not exclusively, the present invention relates to the field of the widespread distribution of consumer goods, such as for example food products in general and/or mass consumer items, and the following description is given with reference to this field of application with the sole purpose of simplifying disclosure thereof.

### Prior art

As is well known in this specific technical sector there has always been the need to make as efficient as possible the transactions among consumers, understood as users interested in the purchase of consumer goods, and small, medium or mass distribution, to be understood as distribution structures and organisations or retail outlets at which the consumer goods are stocked and available for purchase.

Often the interests of the users and those of the abovementioned structures partially interfere or even conflict with each other.

On the one hand users would like to be able to have consumer goods in proximity of their homes and at relatively low costs, while for the distribution structures it would be better to achieve medium-large dimensions, also locating outside of town and city centres to benefit from economies of scale in the procurement and in the handling of the goods to be stocked and sold.

In this scenario mass distribution tends to erode the market shares of small-scale distribution, that is to say that the supermarkets take the place at an increasingly fast rate of the small specialist "corner" shop and are located in geographical points with easy access either via the public transport system or major road transfer routes.

All this has entailed and still entails today many benefits, mainly in terms of competitive costs of the consumer goods, yet also disadvantages that are easy to imagine. On the one hand the specialist retail outlets or shops are reduced in number under the relentless competition of mass distribution, with the result that the consumers, more or less occasional, no longer manage to meet all their purchasing needs in the area around their homes. On the other hand mass distribution has to be selective in order to be competitive and cannot dedicate much or any space to niche articles or those which do not have features of mass and continuative consumption.

In this scenario it may also be that consumers engaged in the purchase of consumer goods at a predetermined retail outlet do not find a certain product and are thus forced to abandon their purchase or make do with a replacement or alternative product.

Should they effectively wish to meet their needs they would be forced to go to another retail outlet without having a priori the certainty of finding the article required and with evident burdens for the additional time dedicated to the purchase and the cost of travelling.

Some large distribution structures and organisations present almost throughout the national territory have sought to propose an alternative solution for receiving purchase orders and for distributing the relative consumer goods. This solution consists of an alternative purchase methodology which exploits the possibility of receiving orders via the Internet, linking up to a website managed by the same large organisation for receiving subsequently the goods purchased via a home delivery service.

Albeit advantageous in various respects, and partially fulfilling the purpose of reducing the costs with the consumers, this solution however has a series of limitations listed herein below.

In the first place the consumer user must be expert in surfing the Web and knowledgeable as to the modes of purchase via e-commerce.

Moreover the supply of consumer goods is limited to the products and articles maintained and distributed by that given distribution organisation.

Finally an agreement has to be made with the supplier in order to be present at delivery of the goods despatched.

The technical problem at the basis of the present invention is to devise a new system, and a relative method, for the management by distribution organisations of purchase orders for consumer goods and for the distribution to consumer users of said goods in such a way as to overcome the limitations suffered with reference to the solutions currently proposed of the prior art.

The system and the method of the present invention should have such structural and functional features to allow purchase orders to be made in a particularly simple and economical way and in respect of distribution structures that are also different one from the other. Moreover the system and the method of the present invention should allow the possibility of receiving at home the consumer goods purchased independently of the presence of the consumer user at the place of delivery of the goods ordered.

### Summary of the invention

The proposed solution at the basis of the present invention is that of providing a network of palmtop computers supplied to users and designed for remote transmission of purchase orders towards a central processing unit which transmits said orders towards relative distribution structures and a plurality of containers of products, with selective access, installed in proximity of the homes of the consumer users to hold and keep the consumer goods purchased until the time of their collection.

On the basis of this proposed solution the technical problem is solved by a system for managing purchase orders for consumer goods and for the widespread distribution of said consumer goods, such as for example food products or mass consumer items, wherein said goods are available at one or more retail outlets and are to be distributed to consumer users, **characterised in that** it comprises:
- a network of palmtop computers supplied to the consumer users and designed to be connected to a remote central processing unit for the sending of purchase orders for consumer goods;
- a plurality of containers for consumer goods, with selective access, installed and supplied electrically in proximity of the homes of the consumer users to hold and keep the consumer goods purchased;
- said central processing unit providing for the identification of the user and for the transmission of one of his or her orders towards relevant distribution structures for the delivery of consumer goods corresponding to said purchase order in a container associated with said identified user.

The invention likewise relates to a method for managing purchase orders for consumer goods and for the widespread distribution of said consumer goods, such as for example food products or mass consumer items, wherein said goods are available at one or more distribution structures or retail outlets and are to be distributed to consumer users, **characterised in that** it comprises the steps of:
- remote receiving of a purchase order for consumer goods via a palmtop computer supplied to a consumer user;
- identifying of the consumer user by means of dating processing at a central processing unit connected to said palmtop computer;
- transmitting said purchase order towards one or more local processing units of said distribution structures at which all or part of the consumer goods ordered are stocked;

- grouping together the lot of the consumer goods ordered and transporting said lot towards a place of delivery;
- releasing the lot of the consumer goods purchased inside of a container with selective access installed at the place of delivery and associated with the consumer user identified.

The invention likewise relates to a container for consumer goods of the type comprising a back, a ceiling and side walls and at least one access aperture closed by a door, **characterised in that** it is supplied electrically and comprises a lock for said door interlocked with means of control of the access assigned to identify a user having rights of access to the container; said means being activatable also by a supplier authorised for the delivery of said consumer goods.

Advantageously, the container comprises at least one refrigerated compartment accessible internally.

Further features and advantages of the system and of the method according to the present invention will be made clearer by the description, given herein below, of a preferred embodiment given by way of a non-limiting example with reference to the accompanying drawings.

### Brief description of the drawings

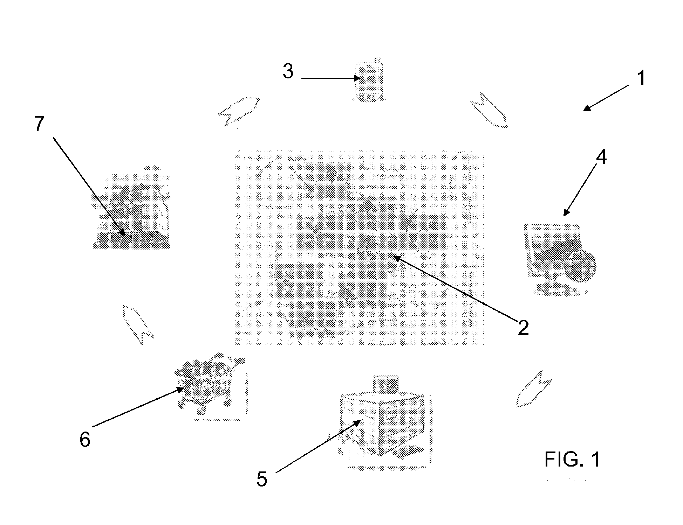

Figure 1 represents a schematic block view of a system made according to the invention for managing purchase orders for consumer goods and for the widespread distribution of said goods;
Figure 2 shows a schematic view of a flow diagram which illustrates the steps of the method of the present invention;
Figure 3 shows a schematic and perspective view of a lot of containers for consumer goods forming part of the system of Figure 1;
Figure 4 shows a schematic and perspective view of a container of the system of Figure 1 in an open configuration;
Figure 5 shows a schematic view of an electronic board incorporated in the container of Figure 4;
Figure 6 shows a schematic view of the internal structure of an integrated circuit card supplied to the user of the system according to the invention;
Figure 7 shows a schematic view of the internal structure of a microcontroller installed in the electronic board of Figure 4.

### Detailed description

Referring to the accompanying drawings, 1 indicates overall and schematically a system for managing purchase orders for consumer goods and for the widespread distribution of said goods.

The system 1 comprises a network 2 of palmtop computers 3 supplied to each consumer user interested in making purchases by means of the method of the present invention. The computers 3 could be so-called desktops, however the palmtop computer has the advantage that the user can easily carry it around and send orders from a distance even when far from his or her home or in any case from the place of delivery of the consumer goods which he or she has to purchase.

The palmtop computers 3 can be of the smartphone type, that is to say cell phones with additional applications and functions made possible by an appropriate program residing in the computer or in the so-called SIM incorporated therein.

Each palmtop computer 3 is identified by means of a user code which allows the identification also of the consumer user supplied with the palmtop. Moreover this identification also entails the relative identification of a place preferred by the user wherein to perform the delivery of the goods which the user has requested, for example his or her home.

The palmtop computer 3 offers the consumer user the opportunity of freely managing his or her purchase choices, using a simple and effective technology. Moreover shopping can be combined with various other services, both informational and management (in cooperation with the public administration bodies) which add value to the technological tool and allow the objective to be achieved of increasing the loyalty of the person to using the particular tool supplied to him or her by joining the system.

Each of the palmtop computers 3 is designed to transmit from a distance purchase orders towards a central data processing unit 4 which is structured preferably, but not necessarily, as a web server or as data server.

This central data processing unit 4 provides for the sequential transmission of the orders received towards a plurality of corresponding local processing units installed at relative distribution structures or retail outlets 5 which are associated one with the other for the purposes of implementation of the method of the present invention.

The distribution structures 5 can also be of the specialist or single-theme type (for example pharmacies or bakeries) and can also be of the more generalist type and able to offer for sale a vast range of mass consumer items.

The central processing unit 4 processes the requests received from the users according to a logic defined by a series of parameters.

For example, the requests are preferably fulfilled according to a FIFO (First In First Out) mode while the logic of purchase and delivery provides for example for preference to be given to the retail outlet radially closest to the geographical position of the consumer user who has made that given order.

If the retail outlet 5 chosen does not have all the goods ordered, an alternative retail outlet 5 is involved, situated in the system 1 at a radial distance immediately successive to that of the retail outlet previously chosen and only for the articles not found in the first retail outlet.

There is nothing against, however, other modes or logics of purchasing being adopted according to needs.

The use of the data collected, in line with the provisions of law in terms of privacy, allows information databases to be created, representing the tastes and needs expressed by each individual consumer user (understood as a single person, family or purchasing group).

Under normal conditions the system 1 allows the collection of many data of consumer users who (subject to consent) can be managed in such a way as to simplify even further the basic purchases, proportionate to the consumption made in the previous periods, to the tastes and to the needs expressed, even bypassing the phase of ordering.

For this purpose the system 1 comprises also a plurality of containers 7 of products, with selective access, installed in proximity of the homes of the consumer users, or in any case in proximity of a place of delivery approved by the user, to hold and keep the consumer goods purchased.

Advantageously, each container 7 of the system 1 comprises a back wall 14, a ceiling 16 and side walls 17,18 and at least one access aperture 19 closed by a door 11.

The container 7 is supplied electrically and comprises a lock 9 for the abovementioned door 11 which is interlocked with means of control 8 of access assigned identification of a user having rights of access to the container 7.

The means of control 8 can however also be activated by a supplier authorised for the delivery of said consumer goods.

Moreover the container 7 comprises a refrigerated compartment 10 accessible internally and closed by a relative door. The door for access to the refrigerated compartment 10 can be the same door 11 for access to the container 7 or a specific door for said compartment. The container 7 is substantially a cabinet with a refrigerator space and with electronic means of control of access.

The container 7 can also be placed outside of the home and is capable of maintaining intact the freshness of possible food products even for several hours.

Extremely concisely, the system 1 of the present invention comprises:
- a network 2 of palmtop computers 3 supplied to the consumer users and designed to be connected to a remote central processing unit 4 for the sending of purchase orders for consumer goods;
- a plurality of containers 7 for consumer goods, with selective access, installed and supplied electrically in proximity of the homes of the consumer users to hold and keep the consumer goods purchased.

The central processing unit 4 provides for the identification of the user and for the transmission of one of his or her orders towards relevant distribution structures 5 for the delivery of consumer goods corresponding to the purchase order in a container 7 associated with the identified user.

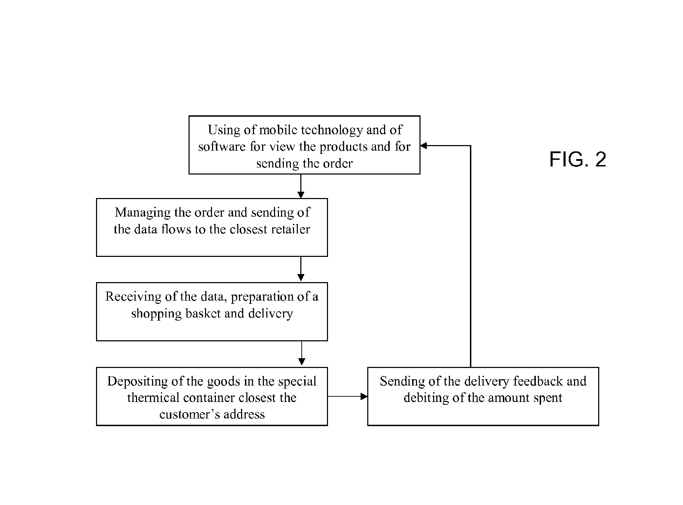

The invention is based on a particular method which is illustrated broadly in the flow diagram of Figure 2 and comprises essentially the following steps:
- remote receiving of a purchase order for consumer goods via a palmtop computer 3 supplied to a consumer user;
- identifying of each consumer user by means of dating processing performed at the central processing unit 4 which is connected to each palmtop computer 3;
- transmitting the purchase order towards one or more local processing units installed at the distribution structures 5 or the retail outlets at which all or part of the consumer goods ordered are stocked;
- grouping together the lot of the consumer goods ordered in a sort of "shopping basket" associated with a given order or with a given user and transporting said lot towards a place of delivery wherein at least one of the abovementioned containers 7 is present;
- releasing the lot of the consumer goods purchased inside a container 7 subject to authorisation for access to the internal compartments of the same container.

The phase of delivery and of release of the consumer goods provides for a debiting to the consumer user at a charge account held or which can only be operated at one or more of the abovementioned distribution structures or retail outlets 5.

Alternatively, obviously, the charging can be performed at a bank current account held by the user or, more particularly, the consumer user who has joined the system may benefit from opening of credit at the given distribution structure against a bank guarantee.

We will now see in detail the steps of the method of the present invention.

After having viewed the offers via special software installed in the palmtop computer 3, the consumer user can simply select the products which he or she needs by scrolling special drop-down menus. The simple selection of a given product allows it to be grouped in a list of products to be ordered.

The user only has to give a definitive confirmation and confirm the place and, preferably, the time of delivery.

The applications program residing in the palmtop computer is of simple and intuitive use and is provided in versions with facilitated access for persons with lesser mastery of the use of the technologies. The technology is also developed in the versions dedicated to persons with limited abilities.

The process continues with the sending of the order and the handling of the flows at the data processing centre of the unit 4. Processing of the order entails the identifying of the retail outlet 5 that has an arrangement with the system 1 closest to the place indicated by the customer and the transmission of the order.

Receiving of the order entails the preparation of a sort of "shopping basket" to be placed inside of the refrigerated container 7 of the consumer user who has made the order.

The transport and the delivery take place according to conventional methods and provide for the placing of the goods ordered in the special container subject to authorised access.

The order made will then be delivered and deposited inside the container 7 without the need for immediate collection by the consumer user, therefore with the maximum flexibility and economy.

Finally a signal of delivery made is sent onto the palmtop computer 3 of the user.

Thanks to the system and to the method of the present invention it is possible to modify the status quo of the complex structuring of the system of distribution of food or of mass consumer goods, both at a territorial level and at a structural level.

In fact by means of the invention it is possible to foresee a new system of distribution organised according to "distribution districts", that is to say according to a group of organisations, distribution structures 5 or retail outlets associated one with the other and capable of linking up the various channels of the production and distribution chain, whether long or short.

The system and the method of the present invention also allow a reduction in the computer costs via a greater involvement of the consumer user in the processes of defining the content of the offer, pursuing the objective of creating distribution channels able to meet also individual needs of the users. Moreover the invention allows the opening-up of new scenarios and opportunities in the relationship between distribution structures and consumer users which allow the definition of times, places and quantities of the supplies, achieving the final objective of increasing the perceived value of the product through the quality of the services related thereto.

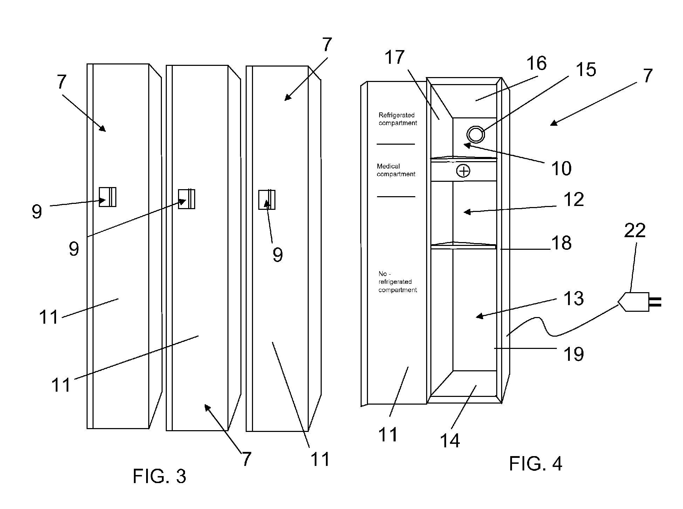

Now, referring in particular to the examples of Figures 3, 4 and 5, the internal structure of the containers 7 is described in greater detail.

As shown in Figure 3, each container 7 appears as a closed cabinet with a substantially parallelepiped shape and with front access via the door 11. Several containers 7 can be installed at a place of delivery approved by the user, for example a housing unit or a group of condominium housing units, or again at a public place (gym, recreational club, place of work, town hall, etc.).

The container 7 is supplied electrically by means of a connection to a 220V electrical network supply source. In essence an electrical connection cable is provided with an end plug 22 intended to be connected to an electrical supply socket installed at the home of the consumer user or, in any case, at the place of delivery of the consumer goods.

Alternatively it is possible to provide a battery electrical power supply for the installation of the container 7 in isolated places.

As already mentioned, provided in the container 7 is a system 15 of refrigeration with TEC (thermo electric cooler) cells, that is to say with Peltier cells. In this way the container 7 does not emit any noise and any vibration given the absence of the compressor.

The container 7 is therefore of simplified structure, low cost and low wear, thanks to the absence of the conventional system of compression cycle refrigeration.

In addition to the compartment 10 there is the alternative possibility of having different refrigerated compartments and with different and controlled temperatures, as in a normal refrigerator. There is even the possibility of varying the capacity of refrigeration in a modular manner thanks to the simplicity of the circuit used, without a variable flow rate valve, with the possibility of handling up to three compartments in an independent manner.

For example Figure 3 shows a compartment 12 for medicinal products and a compartment 13 for mass consumer goods which do not require particular climatic conditions for their preservation.

The casing of the container 7 can be made also in stainless steel for particular uses in aggressive environments. The rear part can be in coated aluminium and the thermal insulation is preferably in CFC-free polyurethane.

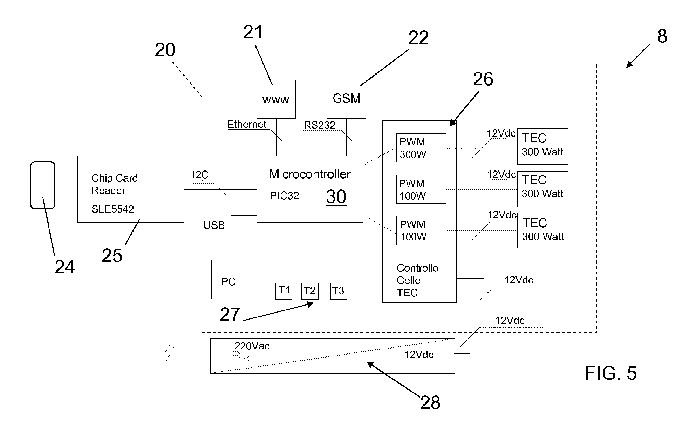

Advantageously, according to the invention, the means of control of access 8 comprise an electronic board 20 with microcontroller or microprocessor 30 shown schematically in Figure 5 and which is assigned supervision of the functions of the container 7.

The board 20 provides an interface 21 for connection via Ethernet line to the Internet network and also a second interface 23 for the remote connection via GSM or GPRS module.

The lock 9 of the door 11 is electric and is interlocked with the electronic control of the board 20 and of the processor 30.

The access is managed by means of a reader 25 of electronic cards 24 or chip cards. Alternatively, any electronic selective access device can be used such as for example: an electronic key, a magnetic badge or other devices similar to those supplied for systems of alarm and control of access.

In any case this reader is in two-way connection with the microprocessor 30 which pilots the snap opening of the lock 9 on recognition of a card of the owner user or authorised to access that container 7, or in any case an operator of the system 1 in possession of an access card of the master type.

In greater detail, the electronic control and management board 20 uses a new generation microcontroller 30, at least 32 bits. This microcontroller enables availability of the necessary power of processing for managing all the main peripherals of the board by means of a single integrated circuit and simplifying therefore the circuit and reducing the necessary components. This microcontroller 30 integrates and has available a large amount of volatile and non-volatile memory and therefore allows advanced functions to be implemented.

In brief, the peculiar features of the microcontroller control board are the following:
- modular construction;
- new generation 32-bit microcontroller 30;
- PWM signal power sections 26 for managing the same number of TEC cells sections;
- interface 25 for chip cards 24;
- interface 23 for GSM modem and Ethernet interface 21, with integrated web server;
- management of at least three temperature sensors T1, T2, T3, an electric lock 9 and possible LCD display.

As regards the system of access control the choice was made to use a plastic card with a chip known commercially as SLE5542.

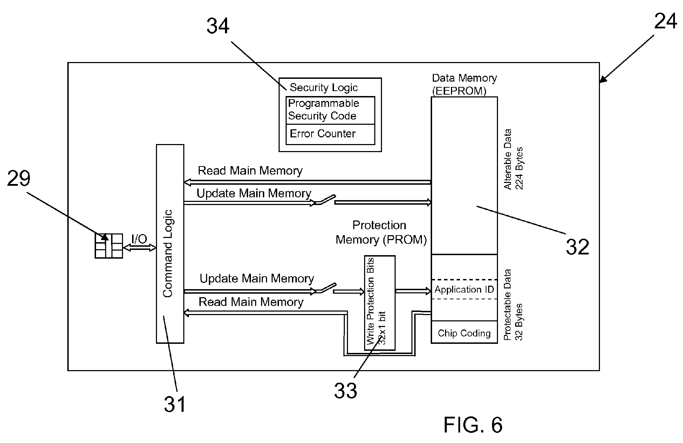

The internal structure of this plastic card 24 is illustrated schematically in Figure 6; it incorporates sophisticated security systems and, in addition to allowing univocal recognition of the user to whom the board is matched, it also enables controls on the frequency of access.

The card comprises an integrated circuit 29 and an interface logic 31 with a non-volatile memory portion 32 containing applications programs and data.

Moreover circuit portions and logics 33, 34 for access control are provided. In short the features of the card 24 are the following:
- guaranteed duration of 100,000 cycles
- retaining of data for 10 years
- 100% compatibility with previous versions of the integrated circuit
- at least 256 bytes of data in non-volatile EEPROM memory
- ESD protection
- advanced security system
- low cost and possibility of personalisation.

As regards instead the integrated microcontroller 30, it also allows the connection of the electronic control board 20 with a possible external computer via a USB port.

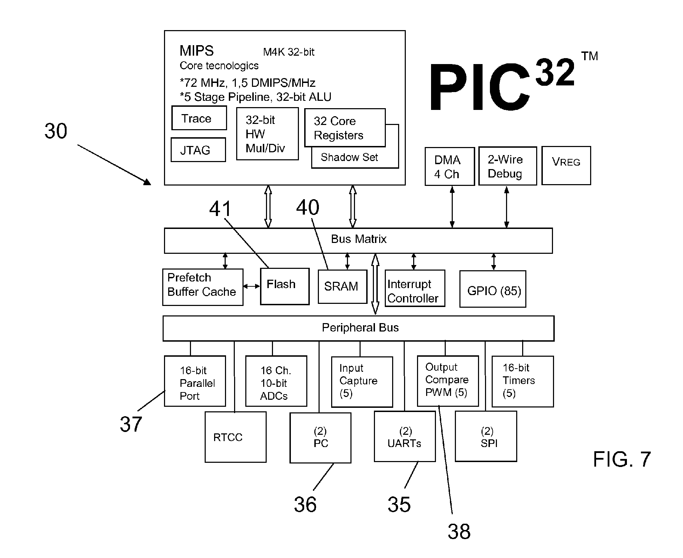

The features of the integrated microcontroller chosen can be seen schematically in Figure 7 and summed up as follows:
- 32-bit architecture;
- USART interface 35 for management of GSM modem;
- USB interface 36 for connection with an external PC;
- interface 37 for management of an alphanumerical LCD screen;
- interface 38 for direct management of the power PWM modules 26;
- ADC converters 39 for management of economical temperature sensors;
- volatile and non-volatile resident memories 40, 41 of the RAM and flash type;
- processing power of at least 120 DMIPS.

As seen, therefore, the container 7 has as salient feature the absence of the conventional refrigeration circuit. The TEC (thermo electric cooler) cells technology allows the construction in a simplified manner of a cabinet with autonomous refrigeration. More particularly, in the case of management of multiple compartments at different temperatures, the management and manufacture of the device is enormously simplified. In fact the lack of compressor, pipes and condenser in favour of a simple external heat exchanger in aluminium, on the hot side of the TEC cell, is all that is necessary for obtaining the result required. Moreover the cost of a Peltier cell is decidedly lower compared to a complete conventional refrigeration system and would even allow battery power supply, albeit for short periods.

The fridge cabinet container 7 only has to maintain, for a length of time reduced to a few hours, the temperature of the foods conserved therein. In order to increase the efficiency of the diffusion of the heat it is preferable to use several TEC cells of lower power instead of a single cell of the same total power. By increasing the surface of exchange between the TEC cells and the compartment to be refrigerated it is possible to improve the efficiency of the TEC cells, applying the same quantity of electrical energy.

Preferably, it was decided to use four cells for the compartment intended to maintain the lower temperature. The rated power of the TEC cells connected in a string of four is of only 400W, of which only 300W will be used to power this small array in order to optimise the quantity of surface of exchange of the heat between the cells and the compartment, requiring therefore a relatively low refrigeration power.

All this allows the use of Peltier cells of low electrical power, with the result of obtaining a decidedly lower manufacturing cost compared to the traditional technologies.

Associated with the board 20 there is also a power supply section 28 which deals with converting the network voltage of 220V AC into a voltage of 12V DC. This voltage is to supply both the TEC cells, via the PWM control sections 26 and the microcontroller control board 20. The power supply unit uses a switching technology, with low weight and small size, and is also low in cost.

By using, moreover, good thermal insulation, the following are obtained: low variable costs, a time of maintaining of the temperature of a few hours with low electrical powers applied and high simplicity of manufacture.

It is worth noting that the choice was made of management via PWM signal digital control of the electrical power applied to the string of TEC cells. The module 26 associated with the microprocessor 30 allows a further optimisation of consumption. In fact it is possible, by integrating the available information of the control board 20, to set also the temperature T1, T2 or T3 at which the newly deposited goods have to be maintained.

In this way it is possible, for example, to apply the maximum electrical power to the TEC cell in the case of frozen goods or maintain only a moderate temperature in the case of goods which do not require controlled temperatures.

In practice the refrigerator cabinet container 7 is able to adapt both to the particular goods present therein and to the particular external weather conditions. Adaptation to the external weather conditions takes place via a temperature sensor 27 provided in each compartment 10, 12 or 13. Adaptation to the particular goods takes place via network (communicating the type of goods deposited) or via operator at the time of the delivery.

When the consumer user provides for collection of the goods, a relative signal of "goods collected" will be sent automatically to the central unit 4. Simultaneously the board 20 provides for the switching-off of the refrigeration, allowing the energy consumption to be optimised.

From the previous description it is clear that the container 7 can be considered a smart and advanced device, from various viewpoints, and cannot be equated with a common refrigerator.

The particular technique adopted allows several compartments with different temperatures to be created in a modular and simple manner. According to the needs of the users it will be possible to add a simple Peltier cell, with relative heat sink in aluminium, to a new compartment. The temperature control will be assigned to a microcontroller circuit 30, with dedicated PWM power section 26 for each cell, which in addition to managing access via the reader 25 and the possible communication with the central unit 4, also allows optimisation of the dissipation of electrical power for the cooling of the refrigerated compartment.

The reader 25 of cards 24 allows the opening only to the consumer user, owner of that given container.

Each card is nominal and personal and allows the user to access the interior of the container to take the foods and the consumer goods purchased on the basis of the rights and privileges which were conferred thereto by signing an agreement with the managing body of the system 1. Through the centralised management it is possible to update in real time the information and the rights of access of each user of the system 1.

The user information is kept in a control centre and, where necessary, transferred in part into the electronic control of the thermal container 7. In this way it will be possible not only to supply the main service but also to update data and information intended for users directly by inserting the card 24 or chip card.

With the system of the invention not only is a classic online market created, which enables the purchase of food products and of consumer goods while sitting comfortably at home or away from home, but also the possibility of purchase and delivery of the goods at any time in the immediate vicinity of the home.

The orders are managed by the central unit 4 and by the local processing units of the retail outlets logistically closest to the address for the despatch. Once the shopping basket has been prepared, it will be delivered and deposited inside the refrigerated container 7 set up near the building of the user or around the entrance.

The players involved in the distribution process will be both large organised distribution centres and local commercial businesses who will have, in this new system, a role of fundamental importance, given their vicinity to the places of consumption and of use of the products.

In this way, the deliveries may be made in very short periods of time and without further increases in costs.

The invention undeniably represents a consistent innovation in the management of distribution of food and/ or of mass consumer products. In fact the system previously described allows a "distribution districts" organisation which enables relationships to be established between the various channels of the chain of the entire distribution process.

The system and the method of the present invention allow the computer costs to be reduced through a greater involvement of the consumer in the processes of definition of the content of the offer, thus creating distribution channels able to relate with the individual needs of the customer in order to define times, places and quantities of the supplies. In this way scenarios and opportunities are opened up which allow the final objective to be achieved of increasing the perceived value of the product through the quality of the services related thereto.

The system and the method of the present invention allow also a sort of "last minute market" to be encouraged, which enables a real revolution in the processes of purchasing by end consumer users to be achieved.

It is worth noting that the system of the present invention allows effective and efficient management of tangible and intangible resources and achieves advantages in terms of reduction in the times of purchasing by the consumer user. The analysis and processing of statistical data collected by the system, with special reference to the behaviour of the consumer users in the definition of their choices of when and how to purchase, represents a further strong point in that it even allows agreements to be made with the users for programmed and deadlined purchases of goods with periodical consumption.

Other advantages come from the fact that it is possible to reposition, within the current structure of the traditional distribution market chain, all the players involved, with the aim of obtaining decidedly important results in both management and profit terms.

The starting point of the new distribution concept is represented by the need to obtain savings in terms of transaction costs. This is obtained through the creation of distribution districts, wherein the small local shops take on a predominant role. The latter, situated in logistically dominant positions in relation to the large structure of organised distribution, can handle the deliveries of the orders in a streamlined and fast manner and above all without increases in logistic costs.

The service of telematic ordering of the products intersects in this way with the traditional chain of small-scale distribution, combining the distinctive features of the quality handled by the small structures with the standardisation of the processes of mass distribution.

The small shopkeeper/distributor who is to be affiliated with the system 1 will have the opportunity of purchasing the products using the same channels used by mass distribution applying retail prices in line with the large commercial centres, in this way obtaining the dual advantage, for mass distribution, of promoting above measure its brand, being present also in the compartment of the sector which defines the so-called small (or last minute) purchases, and the opportunity for the local distributor of offering innovative services and competitive prices.

The current system of competition, which sees organised mass distribution opposing the small local distributor, is cancelled out according to the need to develop information interchanges capable of creating added value for both types of distribution.

From a vertical organisational configuration, which sees the opposing of competitive objectives among the varyingly classifiable distributors, a circular configuration could be obtained which creates mutual advantages starting with the mass distributor, via the end consumer, likewise providing for the supply of the cycle through the management and the use of the information produced by the same.

The innovation consists therefore in creating an integrated system among the various players involved who, by means of the use of fixed and mobile technologies, obtain the cyclical result of the creation of added value in the various directions of the single value chain.

The following is a summary also of the implications which the new system will have in respect of the social players who are to relate within it.

Consumer users:
for them the innovation consists in the creation of "*distribution districts*" able to reduce or even cancel out the costs of delivery and transport, maintaining high the system of creation of value for the customer, due to the advantages which can be traced to:
   - the *last minute market,* and therefore immediate availability of the product;
   - reduction in the waste due to incorrect valuations of the quantities purchased in relation to effective consumption;
   - possibility of having agreed a lending of funds such as to be able to spread the payments at prefixed and constant instalments, allowing the individual or family to plan the costs relating to the expenditure aside from effective consumption, for example monthly;
   - saving of the costs linked to travel;
   - creation of the "customer profile" with the possibility of receiving at prefixed deadlines, without the need for materially providing for the order, the products of cyclical consumption with application of special discounts;
   - possibility of management of the deliveries of hot and readymade foods, linked to the special diets (also low-calorie) of the consumers, which will be managed with the aid of the cell phone, entering the personal diets of the users. Affiliation to the "diet service" will allow the foods to be obtained which are effectively necessary in quantity and quality, according to what is imposed by medical prescriptions or by the personal choices of the customer by virtue of monthly or weekly programmes.

In brief the consumer user will have the possibility of purchasing that which he or she effectively needs, in the place and in the moment wherein the need arises. Moreover he or she may have availability of a series of additional services, supplied through the use of mobile technology, which will bring value to the entire system, seen as a joining link of different markets brought together one with the other by the need to relate to the end consumer.

What represents a further evident advantage is the saving that can be obtained from validation of the customer profile which will be processed for each user. The latter will have the opportunity of purchasing the products of cyclical consumption, necessary for meeting the needs for a long period, which will be delivered thereto directly at his or her home, according to the consumption habits and at prefixed deadlines.

Distribution structures:
The distribution districts involve small and medium-sized local supermarkets, pharmacies, bars, restaurants, etc., used to serve preestablished zones within the urban territory.

Having identified the area to be served, each tradesperson that has an arrangement will be assigned a specific zone, characterised by the true simplicity of logistic management, due to the proximity between the retail outlet and the place chosen by the end consumer for the delivery.

Assigning of the zones contributes to a substantial lowering of costs in that, since the areas served are not large in size, the same organisation of the tradesperson can be made available to the District, without increasing ordinary running costs.

In any case, by providing an increase in turnover, due above all to the creation (in normal conditions) of the so-called *customer profile,* the affiliated tradesperson may benefit from the economies of scale due to a better selection of the purchases and to a considerable reduction in unsold stock and the locking-up of capital.

Moreover, the opportunity is provided of obtaining further reductions of the costs of purchase of the goods and of the products, due to the affiliation to the system and through this to a large group of organised distribution. The opportunity will therefore be given, also to the small tradesperson, of being part of a complex system, which will enable him or her to use the computer platforms of mass distribution for the management of the warehouse and of the orders, with absolutely low costs, integrating his or her own activity with that upstream relating to the distributor. Moreover the same stock can be managed in a more streamlined manner, both upstream and downstream.

The centralised management of the orders guarantees a considerable saving in terms of transaction times linked to the dealings with sales reps, small distributors, etc., in addition to creating for the retail outlet itself a purchaser profile capable of better regimenting the purchase choices. Likewise, without the need to place the products on the shelves for viewing and sale, in that this phase is managed virtually by the consumer on the cell phone, a further saving in time and resources will be obtained.

The economies thus obtained may be used in the management of zone or district distribution.

In addition to what has just been mentioned there are the advantages linked to the increase in spot purchase customers and also cyclical purchase arising from the implementation of the customer profile.

Again the positioning of the image of the small retailer within a widespread and modern distribution system brings the benefits arising from the promotional events which will be personalised for the individual customers of the habitual retailer.

Organised mass distribution:
This may also play a leading role in the system of the invention through a substantial reviewing of the role of small-scale distribution on the market.

While it is true that Italian mass distribution holds more than 50% of the entire sales of the market for consumer goods, an important factor that is not to be underestimated is that of the "pulverisation" of the sector.

65% of shops in Italy are made up of small individual businesses which in the system hypothesised represent a major opportunity for recovering market spaces which would otherwise be unused.

Therefore, basing on the concept of integration of online sales with those of real shops, mass distribution has the opportunity of intercepting a good part of so-called last minute purchases, which for obvious reasons of convenience are not made at large shopping facilities but instead in small and medium-sized local shops.

Through the (wholesale) supply of the products sold in the territorial retail outlets, recognising a higher discount rate for the affiliate of the system and leaving aside the quantities ordered, the following advantages can be obtained:
- increase in turnover deriving from the expansion of own distribution chain, through the affiliates;
- possibility of spreading private label products, i.e. with proprietary brand (given the current tendencies of the system, which sees a growth in these sales of more than 13%) and the non-packaged products such as pasta or detergents, so-called "on tap";
- greater certainty of credits, given participation in the system as fundamental player, which has proof of the transactions and of the returns deriving from sales via the distribution district;
- reduction in costs deriving from shortages, thefts and errors;
- improved management of purchases deriving from the implementation of sales per "customer profile".

With the awareness that the large shopping centre represents in any case an unmissable engagement for the modern consumer, mass distribution, in the hypothesis foreseen, would appropriate indirectly market spaces in which it is potentially excluded (such as those of the last minute or small daily shopping) in addition to expanding the presence of its own brand in the territory, and more generally on the entire market.

Mobile telephony:
The system of the "distribution districts" can revolutionise the concept of shopping through the use of mobile technology. This allows users to access information on their cell phone, at any time, and above all with mobility.

Attention has been focused on the possibility of being able to purchase the goods without the need for particular applications. In other words the technology whereby the shop is made available is a simple web server.

This allows on the one hand availability of an economical technology, yet at the same time allows functioning on any device. In fact practically any cell phone, even low cost and not state of the art, allows surfing on the web. The possibility of being able to surf the Internet via a browser is the only real prerequisite. Moreover the telephone provider, by making available its own telematic infrastructure, can verify the identity of the customer and enable purchasing of the goods without the complication of entering the credit card number or secret codes linked to the current account.

Mobile e-commerce is the new model which, as widely and authoritatively maintained, will shift the concept of electronic commerce from the PC-landline telephony link, making available e-business services through the use of the cell phone.

The "mobile partner" who, by means of the concession of a terminal and preparing special tariff plans by subscription, can obtain innumerable advantages, as listed herein below:
- growth in economic volumes and clientele;
- creation of further profits from advertising and marketing campaigns, by means of banners and advertising spaces in the mobile portal of the system;
- creations of new multimedia services and contents as an addition to the portal.

The system and the method of the present invention allow considerable savings in social costs to be obtained:
- reduction in paper and shopping bags, using the special baskets (loading and unloading) which are to be provided to each user;
- reduction in the use of means of locomotion for journeys due to the purchase of the daily or last minute shopping;
- service of free collection of food not consumed or donated on a voluntary basis to social assistance centres.

## Claims

1. System (1) for managing purchase orders for consumer goods and for the widespread distribution of said consumer goods, such as for example food products or mass consumer items, wherein said goods are available at one or more retail outlets and are to be distributed to consumer users, **characterised in that** it comprises:
- a network of palmtop computers (3) supplied to the consumer users and designed to be connected to a remote central processing unit (4) for the sending of purchase orders for consumer goods;
- a plurality of containers (7) for consumer goods, with selective access, installed and supplied electrically in proximity of the homes of the consumer users to hold and keep the consumer goods purchased;
- said central processing unit (4) providing for the identification of the user and for the transmission of one of his or her orders towards relevant distribution structures (5) for the delivery of consumer goods corresponding to said purchase order in a container (7) associated with said identified user.

2. System according to claim 1, **characterised in that** at least some of said containers comprise a refrigerated compartment.

3. System according to claim 1, **characterised in that** each consumer user is also provided with an electronic card (20) for the authorised access to the container (7) associated therewith and that the staff of said distribution structures (5) in charge of delivery of the consumer goods are supplied with a master electronic card for the access to the same container (7).

4. Method for managing purchase orders for consumer goods and for the widespread distribution of said consumer goods, such as for example food products or mass consumer items, wherein said goods are available at one or more distribution structures (5) or retail outlets and are to be distributed, following purchase orders, to consumer users, **characterised in that** it comprises the steps:
- remote receiving of a purchase order for consumer goods via a palmtop computer (3) supplied to a consumer user;
- identifying of the consumer user by means of dating processing at a central processing unit (4) connected to said palmtop computer (3);
- transmitting said purchase order towards one or more local processing units of said distribution structures (5) at which all or part of the consumer goods ordered are stocked;
- grouping together the lot of the consumer goods ordered and transporting said lot towards a place of delivery;
- releasing the lot of the consumer goods purchased inside of a container (7) with selective access installed at the place of delivery and associated with the consumer user identified.

5. Method according to claim 4, **characterised in that** the step of delivery and of release of said consumer goods provides for a charge to the consumer user at a charge account which can be operated at one or more of said distribution structures.

6. Method according to claim 5, **characterised in that** the step of release of said consumer goods inside of the container (7) provides for previous authorisation for access by means of the reading of an integrated circuit identification card (24).

7. Container (7) for consumer goods of the type structured essentially with a cabinet with a back (14), a ceiling (16) and side walls (17, 18) and at least one access aperture (19) closed by a door (11), **characterised in that** it is supplied electrically and it comprises a lock (9) for said door interlocked with means of control (8) of access assigned identification of a user having rights of access to the container (7); said means of control (8) being activate also by a supplier authorised for the delivery of said consumer goods.

8. Container according to claim 7, **characterised in that** it comprises at least one refrigerated compartment (10) accessible inside the container (7).

9. Container according to claim 8, **characterised in that** said means of control (8) of access comprise an electronic board (20) with microcontroller (30) connected to a reader (25) of electronic cards (24) of user identification and connected moreover to at least one temperature sensor of said refrigerated compartment (10).

10. Container according to claim 7, **characterised in that** said compartment is maintained refrigerated by means of Peltier cells.
